# EUROPÄISCHE PATENTANMELDUNG

(11) **EP 1 767 781 A2**
(43) Veröffentlichungstag der Anmeldung: **28.03.2007**
(21) Anmeldenummer: 06017335.8
(22) Anmeldetag: 21.08.2006
(51) Int. Cl.: F03D 7/04

(54) **Verfahren zur Anpassung einer Windenergieanlage an gegebene Windverhältnisse**

(30) Priorität: 22.09.2005 DE 102005045516
(71) Anmelder: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(57) **Zusammenfassung**

Die Erfindung betrifft ein Verfahren zum Betreiben einer Windenergieanlage. Es werden während des Betriebs der Windenergieanlage auf der windzugewandten Seite der Windenergieanlage (10) Parameter orts- und/oder zeitaufgelöst gemessen, die die Windverhältnisse in dem Messbereich beschreiben, vorzugsweise die Windgeschwindigkeit und/oder die Windrichtung. Die Windparameter werden in verschiedenen vertikalen Abständen vom Boden, nämlich verschiedenen Höhen gemessen. Die Windparameter werden in horizontalen Abständen von dem Rotor (16) gemessen, die derart gewählt sind, dass die Windanstellwinkel der einzelnen Rotorblätter (20) in Reaktion auf die gemessenen Windparameter anpassbar sind, bevor der den Windparametern zugrunde liegende Wind, insbesondere eine Windfront oder eine Windböe, den Rotor (16) erreicht. Aus den gemessenen Windparametern werden, insbesondere kontinuierlich oder periodisch, Werte prognostiziert bzw. errechnet - Prognosewerte -, die für verschiedene Höhen zukünftig an den Rotorblättern auftretende Windverhältnisse beschreiben. Abhängig von diesen prognostizierten bzw. errechneten Prognosewerten in den verschiedenen Höhen werden die Windanstellwinkel der einzelnen Rotorblätter (20) einzeln und unabhängig voneinander eingestellt, vorzugsweise mehrfach während einer vollständigen Umdrehung eines Rotorblattes.

## Beschreibung

Die vorliegende Erfindung betrifft ein Verfahren zum Betreiben einer Windenergieanlage, insbesondere zur Anpassung einer Windenergieanlage an gegebene Windverhältnisse, wobei die Windenergieanlage einen von Wind antreibbaren Rotor aufweist mit zumindest einem Rotorblatt sowie einen Generator zur Umwandlung der mechanischen Energie des Rotors in elektrische Energie. Weiter betrifft die Erfindung ein Verfahren zum Betreiben eines Windparks aus derartigen Windenergieanlagen sowie eine Windenergieanlage mit einer Steuerungs-/Regelungseinrichtung zur Durchführung des vorgenannten Verfahrens.

Es ist bekannt, Windenergieanlagen abhängig von gegebenen Windverhältnissen zu regeln beziehungsweise einzelne Bauteile der Windenergieanlage abhängig von den Windverhältnissen anzusteuern. Es ist beispielsweise bekannt, an dem hinteren Ende einer Gondel einer Windenergieanlage, also auf der windabgewandten Seite der Windenergielanlage, eine Windfahne anzuordnen. Abhängig von der mittels der Windfahne bestimmten Windrichtung wird dabei insbesondere der sogenannte Windnachführmechanismus der Windenergieanlage geregelt. Dabei wird der Rotor der Windenergieanlage mittels entsprechender Motoren der aktuellen Windrichtung nachgeführt, sodass dieser möglichst rechtwinklig zur aktuellen Windrichtung steht. Nachteilig bei der Messung des Windes am hinteren Ende der Gondel ist insbesondere, dass die dort vorliegenden Windverhältnisse durch den Rotor, insbesondere die Rotorblätter, der bezogen auf die Windströmung gegenüber der Windfahne stromaufwärts angeordnet ist, stark beeinflusst werden. Die Windverhältnisse an dem Ort der Windfahne stimmen daher häufig nicht mit den Windverhältnissen am Ort der Rotorblätter oder unmittelbar vor den Rotorblättern überein. Die Folge ist, dass die Regelung der Windenergieanlagen häufig nicht optimal ist.

Des Weiteren ist im Stand der Technik ein Verfahren zur Anpassung einer Windenergieanlage an bestehende Windverhältnisse bekannt, bei dem abhängig von der aktuellen Leistungsabgabe der Windenergieanlage, das heißt, zumindest indirekt abhängig von den aktuellen Windverhältnissen am Ort der Rotorblätter, der Anstellwinkel einzelner oder sämtlicher Rotorblätter der Windenergieanlage eingestellt wird. Dabei werden bei einer Ausführungsform dieses Standes der Technik bei hohen Windgeschwindigkeiten, die im schlimmsten Falle zu einer Zerstörung der Rotorblätter der Windenergieanlage führen könnten, und damit bei einer kritisch hohen Leistungsabgabe der Windenergieanlage, die Rotorblätter um ihre jeweilige Längsachse gedreht, um dem Wind weniger Widerstand zu bieten und Schäden zu vermeiden. Nachteilig bei diesem Stand der Technik ist insbesondere die Trägheit des Verfahrens. So erfolgen die Reaktionen der Windenergieanlage auf sich ändernde Windverhältnisse erst dann, wenn die entsprechenden Windfronten oder Windböen die Rotorblätter der Anlage bereits erreicht haben und schon zu einer bestimmten, eventuell bereits kritischen Erhöhung der Leistungsabgabe der Windenergieanlage geführt haben. Beispielsweise plötzliche, besonders starke Windböen oder Turbulenzen können dabei zu Zerstörungen der Anlagen führen, da sie erst dann registriert werden, wenn sie die Rotorblätter der Anlage bereits erreicht haben.

Aufgabe der vorliegenden Erfindung ist insbesondere, ein Verfahren zur Anpassung einer Windenergieanlage an gegebene Windverhältnisse der eingangs genannten Art anzugeben, bei dem besonders kurze Reaktionszeiten der Anlage auf sich ändernde Windverhältnisse gegeben sind. Des Weiteren ist es Aufgabe der vorliegenden Erfindung, ein entsprechendes Verfahren zum Betreiben eines Windparks anzugeben sowie eine Windenergieanlage zur Durchführung des Verfahrens.

Diese Aufgabe wird gelöst durch Verfahren gemäß den Patentansprüchen 1, 14 und 18, eine Windenergieanlage gemäß Anspruch 7 sowie einen Windpark gemäß Anspruch 13.

Erfindungsgemäß ist vorgesehen, dass während des Betriebs der Windenergieanlage auf der windzugewandten Seite der Windenergieanlage Parameter orts- und/oder zeitaufgelöst gemessen werden, die die Windverhältnisse in dem Messbereich beschreiben, vorzugsweise die Windgeschwindigkeit und/oder die Windrichtung. Die Windparameter werden dabei in verschiedenen vertikalen Abständen vom Boden, nämlich verschiedenen Höhen gemessen, sowie in horizontalen Abständen von dem Rotor, die derart gewählt sind, dass die jeweiligen Windanstellwinkel der einzelnen, zumindest zwei Rotorblätter in Reaktion auf die gemessenen Windparameter anpassbar sind, bevor der den Windparametern zugrunde liegende Wind, insbesondere eine Windfront oder eine Windböe, den Rotor erreicht. Dabei werden aus den gemessenen Windparametern, insbesondere kontinuierlich oder periodisch, Werte prognostiziert bzw. errechnet - Prognosewerte -, die für verschiedene Höhen zukünftig an den Rotorblättern auftretende Windverhältnisse beschreiben. Abhängig von diesen prognostizierten bzw. errechneten Prognosewerten in den verschiedenen Höhen werden die Windanstellwinkel der einzelnen Rotorblätter einzeln und unabhängig voneinander eingestellt, vorzugsweise mehrfach während einer vollständigen Umdrehung eines Rotorblattes. Entsprechend werden die Vorfeldmessungen in einer derart hohen Auflösung durchgeführt, dass an der Rotorblattebene der Windenergieanlage für verschiedene Höhen auch unterschiedliche Windverhältnisse prognostizierbar sind.

Es wird demnach anders als im Stand der Technik in verschiedenen Höhen detaillierte Vorfeldmessungen der Windverhältnisse vorgenommen, das heißt, in einem ausreichend großen Abstand vor der jeweiligen Windenergieanlage werden vorzugsweise Windgeschwindigkeit und/oder Windrichtung bestimmt. Aus diesen Windverhältnissen können Rückschlüsse gezogen werden über die im weiteren Verlauf, d.h. nach einer bestimmten Zeitspanne, am Ort des Rotors vorherrschenden Windverhältnisse. Aus dem Abstand zur Windenergieanlage bzw. dem Abstand des Rotors von dem Messbereich kann berechnet werden, zu welchem Zeitpunkt diese Windverhältnisse in unterschiedlichen Höhen am Ort der Windenergieanlage herrschen werden. Abhängig davon werden schließlich die Windanstellwinkel der zumindest zwei, üblicherweise drei, Rotorblätter unabhängig voneinander mittels der Verstelleinrichtung eingestellt.

Dies ist insbesondere vorteilhaft angesichts der immer größer werdenden Windenergieanlagen, bei denen die Rotorblätter besonders große Flächen überstreichen, sodass die einzelnen Rotorblätter während einer vollständigen Drehung häufig unterschiedlichsten Windverhältnissen ausgesetzt sind. Beispielsweise kann die Spitze des einen Rotorblattes, das während einer Drehung nach oben zeigt, starkem Wind ausgesetzt sein, während die Spitze des anderen Rotorblattes, das zum gleichen Zeitpunkt etwa schräg nach unten zeigt, eher mittlerem oder schwachem Wind ausgesetzt sein kann. Im Rahmen der vorliegenden Erfindung werden diese verschiedenen Windverhältnisse in verschiedenen vertikalen Bodenabständen vorteilhafter Weise erfasst und/oder ermittelt, bevor sie den Rotor erreichen.

Was die Berechnung der Prognosewerte betrifft, so wird diese bevorzugt mithilfe von 3D - Modellen des die Windverhältnisse beeinflussenden, (geographischen) örtlichen Umfelds der Windenergieanlage durchgeführt. Bei einer Windenergieanlage eines Windparks fließen in die Berechnung beispielsweise naturgemäß die stromaufwärts der Windströmung angeordneten Windenergieanlagen ein, die die Windverhältnisse derjenigen Windenergieanlage beeinflussen, für deren Standort die Prognosewerte berechnet werden sollen.

Theoretisch kann während einer vollständigen Rotation eines Rotorblatts um die Rotorachse der Windanstellwinkel des Rotorblatts mehrfach oder auch kontinuierlich an die im Vorfeld gemessenen - für die Rotorblätter zukünftigen - Windverhältnisse angepasst werden.

Die Windparameter sollten - auf der windzugewandten Seite der Windenergieanlage - vorzugsweise zumindest in einem Bereich einer zu erwartenden Hauptwindströmung gemessen werden. Wenn eine Windenergieanlage installiert wird, so ist üblicherweise aus in der Vergangenheit durchgeführten Messungen bekannt, aus welcher Hauptwindrichtung bzw. aus welchen Hauptwindrichtungen Winde zu erwarten sind. Die einzusetzenden Messmittel zur Messung der Windparameter können demnach im Wesentlichen so angeordnet sein, dass sie den Bereich der Hauptwindströmungen erfassen können. Falls denkbar ist, dass der Wind aus nahezu sämtlichen Himmelsrichtungen wehen kann, liegt es natürlich auch im Rahmen der Erfindung, die Messmittel so zu platzieren, dass die Windparameter in jedem denkbaren Bereich um die Windenergieanlage herum gemessen werden können.

Was den horizontalen Abstand betrifft, in dem die Windparameter bezogen auf den Rotor gemessen werden, so sollte dieser - wie weiter oben bereits angedeutet - vorzugsweise derart gewählt sein, dass die Zeit, die der Wind von diesem Punkt bis zum Rotor benötigt, ausreicht, um Betriebsparameter der Windenergieanlage, insbesondere die Windanstellwinkel der oder des Rotorblattes, in Reaktion auf die gemessenen und insbesondere ausgewerteten Windparameter einzustellen, bevor der Wind anschließend den Rotor erreicht. Je größer eine maximale Windgeschwindigkeit ist, die in dem Gebiet der zu installierenden Windenergieanlage zu erwarten ist, desto größer wird dabei der horizontale Abstand des Messbereiches von der Rotorblattebene sein, um die vorgenannte Bedingung zu erfüllen, da die vor der Anlage gemessene Windböe entsprechend schnell die Strecke zwischen Messbereich und Rotor überwindet.

Zweckmäßigerweise ist zumindest ein horizontaler Abstand von mindestens 1 Meter, vorzugsweise von mindestens 10 Metern, besonders bevorzugt von mindestens 20 Metern von der Rotorblattebene vorgesehen. Natürlich sind auch größere oder kleine Abstände denkbar.

Die Messung der Windparameter erfolgt in verschiedenen vertikalen Luftschichten. Zumindest ein Windparameter wird in einer bevorzugten Ausführungsform der vorliegenden Erfindung in einem vertikalen Bodenabstand gemessen, dessen Wert in einem Intervall zwischen dem bodennächsten Punkt und dem bodenentferntesten Punkt der von dem Rotorblatt der Windenergieanlage überstrichenen Fläche liegt. Damit ist gewährleistet, dass der Wind auch und insbesondere in der Höhe der Rotorblätter gemessen wird. Es kann davon ausgegangen werden kann, dass Windverhältnisse, die in dieser Höhe vor der Windenergieanlage gemessen werden, mit den später am Ort des Rotors, insbesondere am Ort der Rotorblätter, auftretenden Windverhältnissen identisch sind, zumindest aber in unmittelbarem Zusammenhang zu diesen stehen. Denkbar ist auch, in verschiedenen horizontalen Abständen von dem Rotor Messungen durchzuführen.

Ein oder mehrere Windparameter können bevorzugt bezogen auf eine Vorderansicht der windzugewandten Seite der Windenergieanlage innerhalb eines gedachten ringförmigen Bereichs um die Rotornabe gemessen werden, mit einem Innenradius des ringförmigen Bereichs, der größer ist als der halbe Abstand zwischen Rotornabe und Rotorblattspitze und mit einem Außenradius, der größer ist als ¾ des Abstandes zwischen Rotornabe und Rotorblattspitze. Vorzugsweise ist der Außenradius gleich groß oder größer als der ganze Abstand zwischen Rotornabe und Rotorblattspitze. Damit wird insbesondere gewährleistet, dass der Wind im Vorfeld der Windenergieanlage in einem Bereich gemessen wird, der bei weiterem Fortschreiten desselben in Richtung der Windenergieanlage mutmaßlich für die Windverhältnisse an der oder den Rotorblattspitzen der Anlage relevant ist.

Eine Windenergieanlage zur Durchführung der vorgenannten Verfahren weist die Merkmale des Patentanspruches 7 auf. Entsprechend weist sie einen von Wind antreibbaren Rotor auf mit zumindest zwei Rotorblättern, deren jeweilige Windanstellwinkel mittels zumindest einer Verstelleinrichtung unabhängig voneinander einstellbar sind, einen Generator zur Umwandlung der mechanischen Energie des Rotors in elektrische Energie sowie eine Steuerungs-/Regelungseinrichtung zur Durchführung der Verfahren.

Bevorzugt sind der Windenergieanlage Messmittel zugeordnet, die derart ausgebildet sind, dass sie Parameter, die die Windverhältnisse in räumlichem, zumindest horizontalem Abstand von dem Rotor auf der windzugewandten Seite der Windenergieanlage beschreiben, in verschiedenen vertikalen Abständen vom Boden, nämlich verschiedenen Höhen messen können.

Besonders bevorzugt können Sodareinrichtungen eingesetzt werden, die insbesondere in der Lage sind, vorzugsweise vom Boden aus, in verschiedenen vertikalen Luftschichten die Windverhältnisse zu bestimmen.

Derartige Sodareinrichtungen können in dem geeigneten horizontalen Abstand auf der windzugewandten Seite der Windenergieanlage positioniert sein. Die Messmittel können dabei beispielsweise ausgehend von der Windenergieanlage über einen bestimmten Raumwinkel verteilt sein. Theoretisch können die Messmittel ausgehend von der Windenergieanlage in jeder Himmelsrichtung positioniert sein, aus der Windströmung zu erwarten ist. Im einfachsten Fall können die Messmittel Aneometer oder andere Windmessmittel sein, die in dem geeigneten horizontalen Abstand von der Windenergieanlage in verschiedenen vertikalen Höhen über dem Boden angeordnet sind.

Die Messmittel sind vorzugsweise an einer Mehrzahl von voneinander beabstandeten, der Windenergieanlage zugeordneten Messstationen angeordnet, die jeweils bezogen auf eine zu erwartende Hauptwindströmung auf der windzugewandten Seite in einem horizontalen Abstand zu der Windenergieanlage angeordnet sind, der derart gewählt ist, dass die Windanstellwinkel der Rotorblätter in Reaktion auf die gemessenen Windparameter einzeln anpassbar sind, bevor der den Windparametern zugrunde liegende Wind, insbesondere eine Windfront oder eine Windböe, den Rotor erreicht.

Die Messstationen können natürlich auch um die Windenergieanlage herum in sämtlichen Himmelsrichtungen angeordnet sein, insbesondere auch in den Richtungen der Windenergieanlagen, aus denen üblicherweise kein oder nur wenig Wind zu erwarten ist. Die Messstationen können die Windenergieanlage dabei vollständig umgeben, beispielsweise indem sie auf einem gedachten Ring um die Windenergieanlage angeordnet sind.

Die Anzahl der Messstationen, der Abstand jeweils benachbarter Messstationen, sowie die an den Messstationen angeordneten Messmittel sind bevorzugt derart aufeinander abgestimmt, dass zwischen jeweils zwei Messstationen eine vorzugsweise im Wesentlichen lückenlose Messung der Windparameter ermöglicht ist.

Derartige Messstationen können vor allem bei Off-Shore-Windenergieanlagen eingesetzt werden. Die der Off-Shore-Windenergieanlage zugeordneten Messstationen sind dabei bevorzugt - unmittelbar oder mittelbar - fest mit dem Meeresboden verbunden oder in bzw. mit diesem verankert. Sie können beispielsweise ein Fundament aufweisen, das im Meeresboden eingelassen ist. Alternativ ist denkbar, die Messstationen schwimmend auszubilden, wobei sie vorzugsweise mittels geeigneter Verankerungen im Wesentlichen ortsfest im/auf dem Meer positioniert sind.

Ein Windpark, der die Aufgabe der vorliegenden Erfindung löst, weist die Merkmale des Anspruches 13 auf.

In einer weiteren Ausführungsform der vorliegenden Erfindung ist ein Verfahren zur Anpassung zumindest einer Windenergieanlage eines derartigen Windparks mit einer Mehrzahl von Windenergieanlagen an gegebene Windverhältnisse vorgesehen, wobei wenigstens ein Betriebsparameter der Windenergieanlage, insbesondere der Windanstellwinkel eines Rotorblattes und/oder die Stellung des Rotorblattes zum Wind, zumindest einer bezogen auf die Windströmung stromabwärts angeordneten Windenergieanlage des Windparks abhängig von wenigstens einem Betriebsparameter zumindest einer anderen, stromaufwärts angeordneten Windenergieanlage des Windparks eingestellt wird, wobei die stromaufwärts angeordnete Windenergieanlage vorzugsweise im äußeren Randbereich des Windparks angeordnet ist.

Demnach wird abhängig von den Betriebsparametern einer stromaufwärts angeordneten Windenergieanlage eines Windparks eine stromabwärts angeordnete Windenergieanlage betrieben. Der oder die einzelnen stromaufwärts angeordneten Windenergieanlagen können dabei naturgemäß selbst wiederum abhängig von weiteren, gegenüber diesen stromaufwärts angeordneten Windenergieanlagen betrieben werden. Alternativ können die stromaufwärts angeordneten Windenergieanlagen naturgemäß entsprechend der oben dargestellten Verfahren betrieben werden. Sie können demnach beispielsweise jeweils abhängig von in deren Vorfeld gemessenen Windparametern an gegebene Windverhältnisse angepasst werden.

Die Aufgabe der vorliegenden Erfindung wird auch gelöst durch ein Verfahren mit den Merkmalen des Anspruchs 14. Danach wird ein Verfahren zum Betreiben einer Windenergieanlage oder eines Windparks aus derartigen Windenergieanlagen angeben, mit folgenden Schritten:
a) während des Betriebs der Windenenergieanlage/des Windparks werden auf der windzugewandten Seite der Windenergieanlage Parameter gemessenen, die die Windverhältnisse in dem Messbereich beschreiben,
b) die Windparameter werden in horizontalen Abständen von dem Rotor gemessen, die derart gewählt sind, dass zumindest ein Betriebsparameter der Windenergieanlage, etwa die Windanstellwinkel des Rotorblattes, in Reaktion auf die gemessenen Windparameter einstellbar sind, bevor der den Windparametern zugrunde liegende Wind, insbesondere eine Windfront oder eine Windböe, den Rotor erreicht,
c) abhängig von den gemessenen Windparametern wird die Leistungsabgabe der Windenergieanlage/des Windparks an ein übergeordnetes Stromnetz gesteuert/geregelt, an dass die Windenergieanlage/der Windpark angeschlossen ist,
d) die Regelung/Steuerung der Leistungsabgabe erfolgt abhängig von den gemessenen Windparametern gemäß vorbestimmter Leistungsabgabeszenarien.

Mittels des vorgeannten Aspektes der vorliegenden Erfindung wird ein möglichst definiertes Verhalten der Anlage in Reaktion auf im Vorfeld derselben gemessene Windparameter ermöglicht.

Gemäß einem bevorzugten Leistungsabgabeszenario kann bei einem anhand der gemessenen Windparameter zu erwartenden, zukünftigen Anstieg oder Abfall der Leistungsabgabe der Windenergieanlage/des Windenergieparks, etwa durch stärkeren bzw. schwächeren Wind, zumindest ein Betriebsparameter der Windenergieanlage/des Windparks, vorzugsweise der Windanstellwinkel eines oder mehrerer Rotorblätter einer oder mehrerer Windenergieanlagen, so eingestellt werden, dass dem Anstieg bzw. dem Abfall der Leistungsabgabe entgegenwirkt wird.

In einer weiteren Ausführungsform wird bei einem anhand der gemessenen Windparameter zu erwartenden, zukünftigen Abfall der Leistungsabgabe der Windenergieanlage/des Windenergieparks, etwa durch schwächeren Wind, zumindest ein Betriebsparameter der Windenergieanlage/des Windparks so eingestellt, dass eine gemäß einer vorbestimmten Funktion fallende Leistungsabgabe erfolgt, insbesondere eine linear fallende Leistungsabgabe.

In einer weiteren Ausführungsform wird bei einem anhand der gemessenen Windparameter zu erwartenden, zukünftigen Anstieg der Leistungsabgabe der Windenergieanlage/des Windenergieparks, etwa durch stärken Wind, zumindest ein Betriebsparameter der Windenergieanlage/des Windparks so eingestellt, dass eine gemäß einer vorbestimmten Funktion steigende Leistungsabgabe erfolgt, insbesondere eine linear steigende Leistungsabgabe.

Wenn demnach die Vorfeld-Messungen vor der Windenergieanlage beispielsweise ergeben, dass der Wind, der die Windenergieanlage im Anschluss an die Messung erreichen wird, plötzlich schwächer wird, kann die Windenergieanlage z.B. so gesteuert werden, dass die Leistungsabgabe nicht entsprechend abrupt endet, sondern gemäß einer vordefinierten Funktion geringer wird.

Vorzugsweise wird bei einem anhand der gemessenen Windparameter zu erwartenden, vorübergehenden Anstieg - Peak - der Leistungsabgabe, etwa verursacht durch eine Böe, zumindest ein Betriebsparameter der Windenergieanlage/des Windparks, vorzugsweise der Windanstellwinkel des Rotorblattes, so eingestellt, dass anschließend in der tatsächlichen Leistungsabgabe höchstens ein abgeschwächter, bevorzugt kein entsprechender Peak auftritt.

Wie der Fachmann erkennt, gibt es verschiedenste Leistungsabgabeszenarien, die abhängig von den Vorfeld-Messungen des Windes sinnvoll eingesetzt werden können, um eine möglichst verlässliches und definiertes Leistungsabgabeverhalten zu ermöglichen.

Die Aufgabe der vorliegenden Erfindung wird auch gelöst durch ein Verfahren mit den Merkmalen des Anspruchs 18. Danach wird ein Verfahren zum Betreiben einer Windenenergieanlage oder eines Windparks aus derartigen Windenergieanlagen, insbesondere gemäß einem der vorgenannten Verfahren zur Verfügung gestellt, wobei die Windenergieanlage einen von Wind antreibbaren Rotor aufweist mit zumindest einem Rotorblatt, einen Generator zur Umwandlung der mechanischen Energie des Rotors in elektrische Energie sowie einen Energiespeicher und/oder einen zusätzlichen, windunabhängigen Energieerzeuger, dessen Energie der windbedingen Ausgangsleistung der Windenergieanlage/des Windparks hinzufügbar ist. Das Verfahren ist dabei durch folgende Schritte gekennzeichnet:
a) während des Betriebs der Windenenergieanlage/des Windparks werden auf der windzugewandten Seite der Windenergieanlage Parameter gemessenen, die die Windverhältnisse in dem Messbereich beschreiben, vorzugsweise die Windgeschwindigkeit und/oder die Windrichtung,
b) die Windparameter werden in horizontalen Abständen von dem Rotor gemessen, die derart gewählt sind, dass zumindest ein Betriebsparameter der Windenergieanlage, etwa der Windanstellwinkel des Rotorblattes, in Reaktion auf die gemessenen Windparameter einstellbar sind, bevor der den Windparametern zugrunde liegende Wind, insbesondere eine Windfront oder eine Windböe, den Rotor erreicht,
c) abhängig von diesen, im Vorfeld der Windenergieanlage gemessenen Windparametern wird der Energiespeicher und/oder der zusätzliche, windunabhängige Energieerzeuger gesteuert/geregelt, insbesondere indem windbedingter Ausgangsleistung der Windenergieanlage Leistung des windunabhängigen Energieerzeugers und/oder des Energiespeichers hinzugefügt wird.

Dieser Aspekt der vorliegenden Erfindung ermöglicht es insbesondere, die Leistungsabgabe von Windenergieanlagen bzw. Windparks so weit wie möglich unabhängig von dem tatsächlich auftretenden Wind möglichst konstant zu gestalten. Beispielsweise kann in dem Energiespeicher in windstarken Phasen windbedingte Energie der Windenergieanlage, also durch die Rotordrehung erzeugte Energie, gespeichert werden und in windschwachen Zeiten abgeben werden, um die Ausgangsleistung der Windenergieanlage konstant zu halten. Alternativ oder zusätzlich kann Energie des separaten Energieerzeugers, bspw. eines Wärmekraftwerks, eines (Diesel-)Stromaggregats oder dergleichen hinzugefügt werden.

Entsprechend wird bevorzugt die Ausgangsleistung der Windenergieanlage bzw. deren Leistungsabgabe an ein übergeordnetes Stromnetz durch Steuerung des windunabhängigen Energieerzeuger und/oder des Energiespeichers derart gesteuert/geregelt, dass sie einen im Wesentlichen konstanten Verlauf hat.

Der Energieerzeuger und/oder der Energiespeicher können in einer zweckmäßigen Ausführungsform abhängig von den im Vorfeld gemessenen Windparametern ein- oder ausgeschaltet werden. Insbesondere ein abhängiges Einschalten des Energieerzeugers ist vorteilhaft, da windunabhängige Energieerzeuger häufig nach dem Einschalten derselben eine gewisse Vorlaufzeit benötigen, um Leistung bzw. Energie zur Verfügung stellen zu können.

In einer weiteren Ausführungsform der vorliegenden Erfindung können basierend auf den im Vorfeld der Windenergieanlage gemessen Windparametern - insbesondere kontinuierlich oder periodisch - Prognosewerte berechnet werden, die jeweils die (zukünftige) Leistungsabgabe der Windenergieanlage repräsentieren. Diese Prognosewerte zur Leistungsabgabe können dem Stromnetzbetreiber jeweils über ein Datennetzwerk zur Verfügung gestellt bzw. übermittelt werden. Der Stromnetzbetreiber kann abhängig von diesen Prognosewerten eigene, geeignete Regelungsmaßnahmen ergreifen. In die Berechnung der Prognosewerte zur Leistungsabgabe können auch aktuelle Betriebsdaten der Windenergieanlage eingehen.

Wie der Fachmann des Standes der Technik erkennt, können sämtliche der im Rahmen dieser Anmeldung genannten Verfahren miteinander kombiniert werden. Wie der Fachmann weitere erkennt, können sämtliche der im Rahmen der Anmeldung beschriebenen Verfahren zum Regeln und/oder Steuern mittels geeigneter Steuerungs- und/oder Regelungseinrichtungen umgesetzt werden.

Weitere Merkmale der vorliegenden Erfindung ergeben sich aus den beigefügten Unteransprüchen, der nachfolgenden Beschreibung konkreter Ausführungsbeispiele sowie aus den beigefügten Zeichnungen. Darin zeigen:
- Fig. 1:: eine Vorderansicht einer Windenergieanlage;
- Fig. 2:: einen Schnitt entlang der Schnittlinie I-I in Fig. 1;
- Fig. 3:: einen Schnitt entlang der Schnittlinie II-II in Fig. 1;
- Fig. 4:: einen Schnitt entlang der Schnittlinie III-III in Fig. 1.

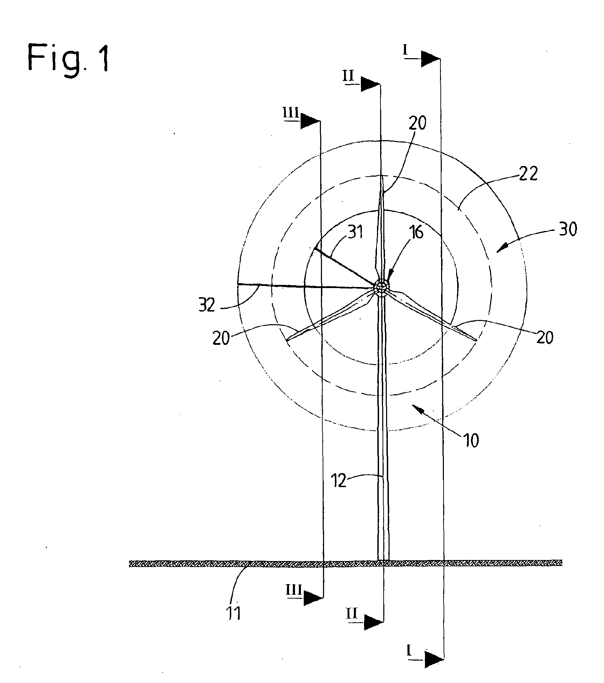

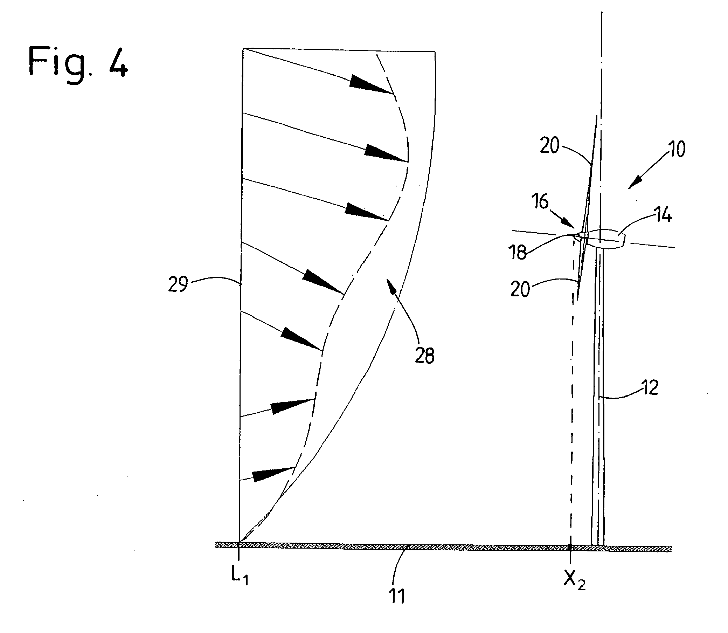

In den Figuren 1 - 4 ist eine Windenergieanlage 10 dargestellt, die am Ende eines vertikalen, auf einem horizontalen Untergrund 11 angeordneten Turms 12 eine auf der Turmoberseite angeordnete Gondel 14 aufweist. An einem windzugewandten Ende der Gondel 14 ist ein Rotor 16 angeordnet, der eine Nabe 18 aufweist. Mit der Nabe 18 verbunden sind drei Rotorblätter 20 des Rotors 16, wobei die Rotorblattwurzeln der Rotorblätter 20 in entsprechende Öffnungen der Nabe 18 eingesteckt und in bekannter Weise mit dieser verbunden sind.

Der Rotor 16 dreht sich um eine leicht gegenüber der Horizontalen nach oben geneigte Achse. Sobald Wind auf die Rotorblätter 20 trifft, wird der Rotor 16 mitsamt Rotorblättern 20 um die Rotorachse in Rotation versetzt. Die Rotorblätter 20 überstreichen dabei eine gedachte Kreisfläche 22, deren Konturen mit gestrichelten Linien dargestellt ist. Über eine nicht dargestellte, allerdings den Fachleuten des Standes der Technik bekannte Verstelleinrichtung können die Rotorblätter 20 einzeln in ihrer Stellung zum Wind verändert werden, das heißt, der Anstellwinkel der Rotorblätter 20 zum Wind ist einstellbar.

Der grundsätzliche Aufbau der Windenergieanlage 10 mit zumindest annähernd horizontaler Rotorachse ist im Stand der Technik bekannt, sodass auf eine detaillierte Darstellung verzichtet wird.

In den Figuren 1 - 3 sind verschiedene Bereiche 24, 26, 28 einer sich in Richtung der Windenergieanlage 10 bewegenden Windböe gezeigt. Die Windenergieanlage 10, insbesondere der Rotor 16, ist der Windböe zugewandt.

Die einzelnen Windböenbereiche 24, 26, 28 repräsentieren die Windböe in einem horizontalen Abstand L₁ - X₂ von dem Rotor 16, insbesondere der Rotorspitze. Die jeweils mit Pfeilen und einer einhüllenden gestrichelten Linie dargestellten Windböenbereiche 24, 26, 28 stellen die Windparameter der Windböe in verschiedenen Abständen vom Boden entlang jeweils vertikaler Messstrecken 25, 27, 29 dar, die jeweils an einer senkrecht zur Zeichnungsebene verlaufenden, gedachten Bodenlinie L₁ enden. Die Pfeillängen repräsentieren dabei die relativen Beträge der Windgeschwindigkeit, während die Pfeilrichtung die jeweilige Windrichtung angeben.

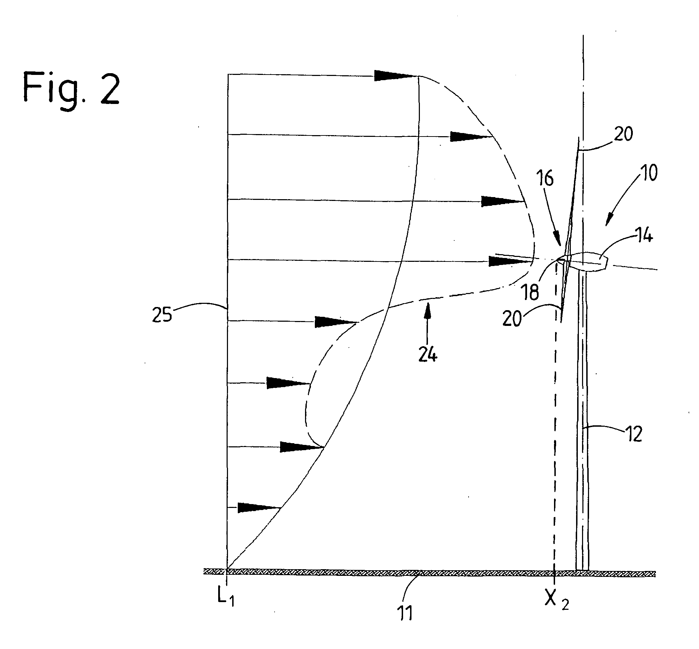

In der Figur 2 ist beispielsweise der Windböenbereich 24 gezeigt, dessen Parameter entlang der Messstrecke 25 jeweils in verschiedenen vertikalen Abständen vom Boden in der horizontalen Entfernung L₁ - X₂ vom Rotor 16 gemessen wurden. Die Messungen erfolgten bezogen auf die Kreisfläche 22 im rechten Bereich derselben, allerdings ausgehend vom bodennahen Bereich bis zu einem oberhalb der Kreisfläche 22 endenden Bereich. Es ist an der jeweiligen Länge der Pfeile insbesondere erkennbar, dass der Wind im oberen Bereich der Rotorblattebene bzw. der Kreisfläche 22 sehr stark ausgeprägt ist, während im unteren Bereich der Rotorblattebene eine deutlich geringere Windgeschwindigkeit herrscht. Die Windrichtung verläuft dabei jeweils horizontal.

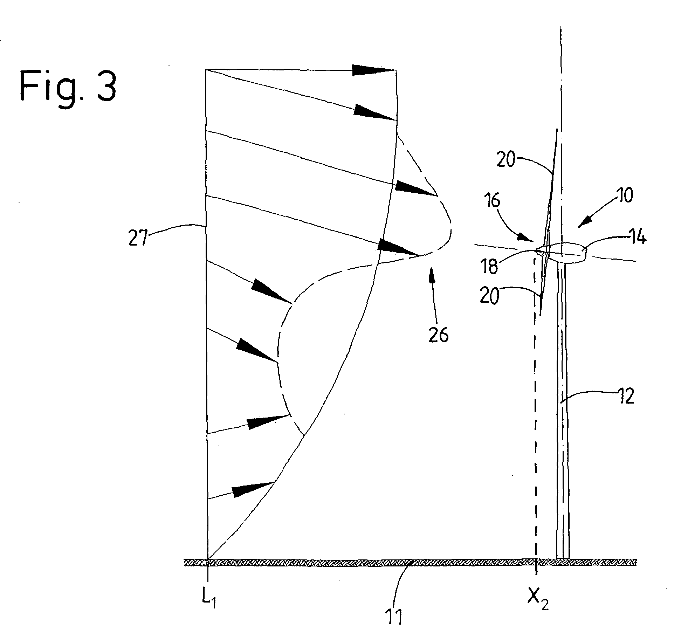

In der Figur 3 ist der Windböenbereich 26 gezeigt, dessen Parameter ebenfalls jeweils in verschiedenen vertikalen Abständen vom Boden in der horizontalen Entfernung L₁ - X₂ vom Rotor 16 gemessen wurden, und zwar entlang der Messstrecke 27. Die Messungen erfolgten bezogen auf die Kreisfläche 22 im mittigen Bereich derselben, nämlich ausgehend vom bodennahen Bereich bis zu einem oberhalb der Kreisfläche 22 endenden Bereich. Der Windböenbereich 26 weist im Bereich der oberen Rotorblattebene ebenfalls hohe Windgeschwindigkeiten auf, die allerdings leicht schräg zum Boden gerichtet sind. Im bodennahen Bereich dagegen sind die Windgeschwindigkeiten deutlich geringer und leicht schräg nach oben gerichtet.

Insgesamt wird aus den Figuren 2 - 4 deutlich, dass eine Windböe bzw. eine Windfront, die auf die Windenergieanlage 10 zuläuft, in verschiedenen räumlichen Bereichen verschiedene Windparameter aufweist. Daher sind auch die Rotorblätter 20 der Windenergieanlage 10 unterschiedlichen Kräften ausgesetzt, abhängig von der individuellen Position des jeweiligen Rotorblattes 20 bei Auftreffen der Windböe auf demselben.

Erfindungsgemäß weist die Windenergieanlage 10 entlang der Bodenlinie L₁ zumindest eine nicht explizit dargestellte Windmesseinrichtung, nämlich eine Sodareinrichtung auf, die die Windparameter des Windes entlang der Messstrecken 25, 27, 29 misst, so dass im horizontalen Abstand L₁ - X₂ vom Rotor 16 ein ortsaufgelöstes und ggfs. zeitaufgelöstes Windprofil gemessen wird.

Grundsätzlich gesprochen können bezogen auf die in Fig. 1 dargestellte Vorderansicht der Windenergieanlage 10 in einer bevorzugten Ausführungsform der vorliegenden Erfindung ein oder mehrere Windparameter innerhalb eines gedachten ringförmigen Bereichs 30 um die Rotornabe 18 gemessen werden, vorzugsweise mit einem Innenradius 31 des ringförmigen Bereichs, der größer ist als der halbe Abstand zwischen Rotornabe 18 und den Rotorblattspitzen 21 der Rotorblätter 20 und mit einem Außenradius 32 der größer ist als der Abstand zwischen Rotornabe 18 und den Rotorblattspitzen 21. Damit wäre sichergestellt, dass der Wind im Vorfeld der Windenergieanlage 10 in einem Bereich gemessen wird, der bei weiterem Fortschreiten desselben in Richtung der Wiridenergieanlage mutmaßlich für die Windverhältnisse an der oder den Rotorblattspitzen der Anlage relevant ist.

Die oben beschriebenen Daten des Windprofils werden einer Steuerungs-/Regelungseinrichtung der Windenergieanlage 10 übermittelt, die unter anderem berechnet, nach welcher Zeitspanne die Windverhältnisse - oder zumindest daraus ableitbare, ähnliche Windverhältnisse - die zum Messzeitpunkt entlang der Messstrecken 25, 27, 29 gemessen wurden, an Ort des Rotors 16, insbesondere am Ort der Rotorblätter 20, herrschen werden. Abhängig von diesen Ergebnissen werden die Rotorblätter 20 entlang ihrer Längsachsen mittels der nicht dargestellten Verstelleinrichtung verstellt, d.h. deren Windanstellwinkel werden in geeigneter Weise an die Windverhältnisse angepasst.

Wie der Fachmann erkennt, können abhängig von den gemessenen Windparametern im Vorfeld der Windenergieanlage 10 nicht nur die jeweiligen Windanstellwinkel der Rotorblätter 20 eingestellt werden, sondern es können verschiedenste andere Betriebsparameter der Windenergieanlage angepasst, insbesondere geregelt werden.

## Patentansprüche

**1.** Verfahren zum Betreiben einer Windenergieanlage, insbesondere zur Anpassung einer Windenergieanlage (10) an gegebene Windverhältnisse, wobei die Windenergieanlage (10) einen von Wind antreibbaren Rotor (16) aufweist mit zumindest zwei Rotorblättern (20), deren jeweilige Windanstellwinkel mittels zumindest einer Verstelleinrichtung einstellbar sind, sowie einen Generator zur Umwandlung der mechanischen Energie des Rotors (16) in elektrische Energie, **gekennzeichnet durch** folgende Schritte:
a) es werden während des Betriebs der Windenergieanlage auf der windzugewandten Seite der Windenergieanlage (10) Parameter orts- und/oder zeitaufgelöst gemessen, die die Windverhältnisse in dem Messbereich beschreiben, vorzugsweise die Windgeschwindigkeit und/oder die Windrichtung,
b) die Windparameter werden in verschiedenen vertikalen Abständen vom Boden, nämlich verschiedenen Höhen gemessen,
c) die Windparameter werden in horizontalen Abständen von dem Rotor (16) gemessen, die derart gewählt sind, dass die Windanstellwinkel der einzelnen Rotorblätter (20) in Reaktion auf die gemessenen Windparameter anpassbar sind, bevor der den Windparametern zugrunde liegende Wind, insbesondere eine Windfront oder eine Windböe, den Rotor (16) erreicht,
d) aus den gemessenen Windparametern werden, insbesondere kontinuierlich oder periodisch, Werte prognostiziert bzw. errechnet - Prognosewerte -, die für verschiedene Höhen zukünftig an den Rotorblättern auftretende Windverhältnisse beschreiben,
e) abhängig von diesen prognostizierten bzw. errechneten Prognosewerten in den verschiedenen Höhen werden die Windanstellwinkel der einzelnen Rotorblätter (20) einzeln und unabhängig voneinander eingestellt, vorzugsweise mehrfach während einer vollständigen Umdrehung eines Rotorblattes.

**2.** Verfahren gemäß Anspruch 1, **dadurch gekennzeichnet, dass** die Windparameter in einem Bereich gemessen werden, der bezogen auf eine zu erwartende Hauptwindströmung auf der windzugewandten Seite der Windenergieanlage (10) angeordnet ist.

**3.** Verfahren gemäß einem oder mehreren der vorhergehenden Ansprüche, **dadurch gekennzeichnet, dass** wenigstens ein Windparameter in einem vertikalen Bodenabstand gemessen wird, dessen Wert in einem Intervall zwischen dem bodennächsten Punkt und dem bodenentferntesten Punkt der von dem Rotorblatt (20) während einer vollständigen Umdrehung beschriebenen Fläche liegt.

**4.** Verfahren gemäß einem oder mehreren der vorhergehenden Ansprüche, **dadurch gekennzeichnet, dass** wenigstens ein Windparameter bezogen auf eine Vorderansicht der windzugewandten Seite der Windenergieanlage innerhalb eines gedachten ringförmigen Bereichs um die Rotornabe gemessen wird, mit einem Innenradius des ringförmigen Bereichs, der größer ist als der halbe Abstand zwischen Rotornabe und Rotorblattspitze und mit einem Außenradius, der größer ist als ¾ des Abstandes zwischen Rotornabe und Rotorblattspitze, vorzugsweise gleich groß oder größer als der ganze Abstand zwischen Rotornabe und Rotorblattspitze.

**6.** Verfahren gemäß einem oder mehreren der vorhergehenden Ansprüche, **dadurch gekennzeichnet, dass** die Parameter durch eine Mehrzahl von bezogen auf eine zu erwartende Hauptwindströmung auf der windzugewandten Seite der Windenergieanlage (10) angeordnete Messstationen erfasst werden.

**7.** Windenergieanlage mit einem von Wind antreibbaren Rotor (16) mit zumindest zwei Rotorblättern (20), deren jeweilige Windanstellwinkel mittels zumindest einer Verstelleinrichtung unabhängig voneinander einstellbar sind, mit einem Generator zur Umwandlung der mechanischen Energie des Rotors (16) in elektrische Energie sowie mit einer Steuerungs-/Regelungseinrichtung zur Durchführung des Verfahrens gemäß einem oder mehreren der vorgehenden Ansprüche.

**8.** Windenergieanlage gemäß Anspruch 7, **dadurch gekennzeichnet, dass** der Windenergieanlage (10) Messmittel zugeordnet sind, die derart ausgebildet sind, dass sie Parameter, die die Windverhältnisse in räumlichem, zumindest horizontalem Abstand von dem Rotor (16) auf der windzugewandten Seite der Windenergieanlage (10) beschreiben, in verschiedenen vertikalen Abständen vom Boden, nämlich verschiedenen Höhen messen können.

**9.** Windenergieanlage gemäß Anspruch 8, **dadurch gekennzeichnet, dass** die Messmittel an einer Mehrzahl von voneinander beabstandeten, der Windenergieanlage (10) zugeordneten Messstationen angeordnet sind, die jeweils bezogen auf eine zu erwartende Hauptwindströmung auf der windzugewandten Seite in einem horizontalen Abstand zu der Windenergieanlage angeordnet sind, der derart gewählt ist, dass die Windanstellwinkel der Rotorblätter (20) in Reaktion auf die gemessenen Windparameter einzeln anpassbar sind, bevor der den Windparametern zugrunde liegende Wind, insbesondere eine Windfront oder eine Windböe, den Rotor (16) erreicht.

**10.** Windenergieanlage gemäß Anspruch 9, **dadurch gekennzeichnet, dass** die Messstationen auf einem gedachten Ring um die Windenergieanlage (10) angeordnet sind.

**11.** Windenergieanlage gemäß einem oder mehreren der Ansprüche 9 oder 10, **dadurch gekennzeichnet, dass** die Anzahl Messstationen, der Abstand jeweils benachbarter Messstationen, sowie die an den Messstationen angeordneten Messmittel derart aufeinander abgestimmt sind, dass zwischen jeweils zwei Messstationen eine bevorzugt lückenlose Messung der Windparameter ermöglicht ist.

**12.** Windenergieanlage gemäß einem oder mehreren der Ansprüche 9 - 11, **dadurch gekennzeichnet, dass** die Windenergieanlage eine Off-Shore-Windenergieanlage ist, wobei die dieser zugeordneten Messstationen - unmittelbar oder mittelbar - fest mit dem Meeresboden verbunden oder in bzw. mit diesem verankert sind.

**13.** Windpark aus mehreren Windenergieanlagen gemäß einem oder mehreren der vorhergehenden Ansprüche 7 - 12, **dadurch gekennzeichnet, dass** zumindest einer Windenergieanlage (10) zur Messung der Parameter, die die Windverhältnisse auf der windzugewandten Seite der Windenergieanlage (10) beschreiben, eine Mehrzahl von voneinander beabstandeter Messstationen zugeordnet ist, die jeweils bezogen auf eine zu erwartende Hauptwindströmung auf der windzugewandten Seite in einem horizontalen Abstand zu der Windenergieanlage (10) angeordnet sind, der derart gewählt ist, dass die Windanstellwinkel der einzelnen Rotorblätter (20) in Reaktion auf die gemessenen Windparameter anpassbar sind, bevor der den Windparametern zugrunde liegende Wind, insbesondere eine Windfront oder eine Windböe, den Rotor (16) erreicht, wobei die Messstationen auf einem gedachten Ring um den Windpark angeordnet sind.

**14.** Verfahren zum Betreiben einer Windenergieanlage oder eines Windparks aus derartigen Windenergieanlagen, insbesondere gemäß einem oder mehreren der Ansprüche 1 - 6, wobei die Windenergieanlage (10) einen von Wind antreibbaren Rotor (16) aufweist mit zumindest einem Rotorblatt (20), sowie einen Generator zur Umwandlung der mechanischen Energie des Rotors (16) in elektrische Energie, **gekennzeichnet durch** folgende Schritte:
a) während des Betriebs der Windenenergieanlage (10)/des Windparks werden auf der windzugewandten Seite der Windenergieanlage (10) Parameter gemessen, die die Windverhältnisse in dem Messbereich beschreiben,
b) die Windparameter werden in horizontalen Abständen von dem Rotor (16) gemessen, die derart gewählt sind, dass zumindest ein Betriebsparameter der Windenergieanlage, etwa die Windanstellwinkel des Rotorblattes (20), in Reaktion auf die gemessenen Windparameter einstellbar sind, bevor der den Windparametern zugrunde liegende Wind, insbesondere eine Windfront oder eine Windböe, den Rotor (16) erreicht,
c) abhängig von den gemessenen Windparametern wird die Leistungsabgabe der Windenergieanlage (10)/des Windparks an ein übergeordnetes Stromnetz gesteuert/geregelt, an das die Windenergieanlage (10)/der Windpark angeschlossen ist,
d) die Regelung/Steuerung der Leistungsabgabe erfolgt abhängig von den gemessenen Windparametern gemäß vorbestimmter Leistungsabgabeszenarien.

**15.** Verfahren gemäß Anspruch 14, **dadurch gekennzeichnet, dass** bei einem anhand der gemessenen Windparameter zu erwartenden, zukünftigen Anstieg oder Abfall der Leistungsabgabe der Windenergieanlage (10)/des Windenergieparks, etwa durch stärken bzw. schwächeren Wind, zumindest ein Betriebsparameter der Windenergieanlage (10)/des Windparks, vorzugsweise der Windanstellwinkel eines oder mehrerer Rotorblätter (22) einer oder mehrerer Windenergieanlagen (10), so eingestellt wird, dass dem Anstieg bzw. dem Abfall der Leistungsabgabe entgegenwirkt wird.

**16.** Verfahren gemäß Anspruch 14 oder 15, **dadurch gekennzeichnet, dass** bei einem anhand der gemessenen Windparameter zu erwartenden, zukünftigen Abfall der Leistungsabgabe der Windenergieanlage (10)/des Windenergieparks, etwa durch schwächeren Wind, zumindest ein Betriebsparameter der Windenergieanlage (10)/des Windparks so eingestellt wird, dass eine gemäß einer vorbestimmten Funktion fallende Leistungsabgabe erfolgt, insbesondere eine linear fallende Leistungsabgabe, und/oder dass bei einem anhand der gemessenen Windparameter zu erwartenden, zukünftigen Anstieg der Leistungsabgabe der Windenergieanlage (10)/des Windenergieparks, etwa durch stärken Wind, zumindest ein Betriebsparameter der Windenergieanlage (10)/des Windparks so eingestellt wird, dass eine gemäß einer vorbestimmten Funktion steigende Leistungsabgabe erfolgt, insbesondere eine linear steigende Leistungsabgabe.

**17.** Verfahren gemäß einem oder mehreren der Ansprüche 14 - 16, **dadurch gekennzeichnet, dass** bei einem anhand der gemessenen Windparameter zu erwartenden, vorübergehenden Anstieg - Peak - der Leistungsabgabe, etwa verursacht durch eine Böe, zumindest ein Betriebsparameter der Windenergieanlage (10)/des Windparks, vorzugsweise der Windanstellwinkel des Rotorblattes, so eingestellt wird, dass anschließend in der tatsächlichen Leistungsabgabe höchstens ein abgeschwächter, bevorzugt kein entsprechender Peak auftritt.

**18.** Verfahren zum Betreiben einer Windenenergieanlage oder eines Windparks aus derartigen Windenergieanlagen, insbesondere gemäß einem oder mehreren der Ansprüche 1 - 6 oder 14 - 17, wobei die Windenergieanlage (10) einen von Wind antreibbaren Rotor (16) aufweist mit zumindest einem Rotorblatt (20), einen Generator zur Umwandlung der mechanischen Energie des Rotors (16) in elektrische Energie sowie einen Energiespeicher und/oder einen zusätzlichen, windunabhängigen Energieerzeuger, dessen Energie der windbedingten Ausgangsleistung der Windenergieanlage (10)/des Windparks hinzufügbar ist, **gekennzeichnet durch** folgende Schritte:
a) während des Betriebs der Windenenergieanlage (10)/des Windparks werden auf der windzugewandten Seite der Windenergieanlage (10) Parameter gemessenen, die die Windverhältnisse in dem Messbereich beschreiben, vorzugsweise die Windgeschwindigkeit und/oder die Windrichtung,
b) die Windparameter werden in horizontalen Abständen von dem Rotor (16) gemessen, die derart gewählt sind, dass zumindest ein Betriebsparameter der Windenergieanlage, etwa der Windanstellwinkel des Rotorblattes (20), in Reaktion auf die gemessenen Windparameter einstellbar sind, bevor der den Windparametern zugrunde liegende Wind, insbesondere eine Windfront oder eine Windböe, den Rotor (16) erreicht,
c) abhängig von diesen, im Vorfeld der Windenergieanlage gemessenen Windparametern wird der Energiespeicher und/oder der zusätzliche, windunabhängige Energieerzeuger gesteuert/geregelt, insbesondere indem windbedingter Ausgangsleistung der Windenergieanlage Leistung des windunabhängigen Energieerzeugers und/oder des Energiespeichers hinzugefügt wird.

**19.** Verfahren gemäß Anspruch 18, **dadurch gekennzeichnet, dass** die Ausgangsleistung der Windenergieanlage (10) bzw. deren Leistungsabgabe an ein übergeordnetes Stromnetz durch Steuerung des windunabhängigen Energieerzeuger und/oder des Energiespeichers derart gesteuert/geregelt wird, dass sie einen im Wesentlichen konstanten Verlauf hat.

**20.** Verfahren gemäß Anspruch 18 oder 19, **dadurch gekennzeichnet, dass** der Energieerzeuger und/oder der Energiespeicher abhängig von den im Vorfeld gemessenen Windparametern ein- oder ausgeschaltet wird.
